# EUROPEAN PATENT SPECIFICATION

(11) **EP 1 413 467 B1**
(45) Date of publication and mention of the grant of the patent: **09.03.2005**
(21) Application number: 02425642.2
(22) Date of filing: 25.10.2002
(51) Int. Cl.: B60K 11/04, F28F 9/00

(54) **Disengagement system for heat exchange modules for vehicles**
Abkuppelungssystem für Wärmetauscher-Module für Fahrzeuge
Système de débrayage pour des modules d'échange de chaleur pour véhicules

(43) Date of publication of application: 28.04.2004
(73) Proprietor: DENSO THERMAL SYSTEMS S.p.A., 10046 Poirino (Torino) (IT)
(72) Inventor: Masciandara, Eustachio, 10098 Rivoli (IT)
(74) Representative: Marchitelli, Mauro

(56) References cited:
- EP-A- 0 838 651
- EP-A- 1 106 413
- US-A- 4 763 723

## Description

The present invention relates to a front heat-exchange module for vehicles having the characteristics referred to in the preamble of the main claim.

Heat-exchange modules for vehicles are known, which comprise a radiator for the cooling of the engine, a condenser forming part of the air-conditioning system of the vehicle, and a conveyor carrying an electric fan. A wide range of systems are known for fixing the condenser, the radiator and the conveyor to the structure of the vehicle. For example, a known technique is to provide, on the manifold tanks of the radiator and on the distributors of the condenser, fixing pins, which protrude with vertical orientation and engage corresponding holes provided on a bottom supporting cross member and a top supporting cross member of the supporting structure made of plastic material. A heat exchange module according to the preamble of claim 1 is known from EP-A- 838 651.

One of the problems of a front heat-exchange module of a vehicle is that of preventing damage to the radiator and to the condenser in the case of frontal impact of slight degree. There have already been proposed systems for fixing the radiator of a vehicle, in which the fixing pins that protrude from the manifold tanks of the radiator constitute calibrated-failure elements, which are designed to yield in the event of frontal impact so as to enable the radiator to move backwards following upon impact, with the aim of preventing more serious damage to the radiator itself. In the event of frontal impact that leads to failure of the fixing pins, the said pins can be replaced in order to restore the functionality of the radiator. The drawback of such a solution lies in the fact that, when the front heat-exchange assembly comprises a radiator, a condenser and a conveyor that are set very close to one another, there may be problems for obtaining failure of the fixing pins and moving-back of the condenser and of the radiator to prevent damage to the heat-exchange devices.

The purpose of the present invention is to provide a system for fixing the radiator, condenser and conveyor to the front supporting structure of a vehicle which will enable the aforesaid drawback to be overcome.

According to the present invention, the said purpose is achieved by a heat-exchange module having the characteristics forming the subject of the main claim.

The characteristics and advantages of the present invention will emerge clearly from the ensuing detailed description, which is provided purely by way of non-limiting example, with reference to the annexed drawings, in which:
- Figure 1 is a front elevation of the rear of a heat-exchange module according to the present invention;
- Figure 2 is an exploded perspective view of the part indicated by the arrow II in Figure 1; and
- Figure 3 is a front elevation, at a larger scale, of the part indicated by the arrow III in Figure 1.

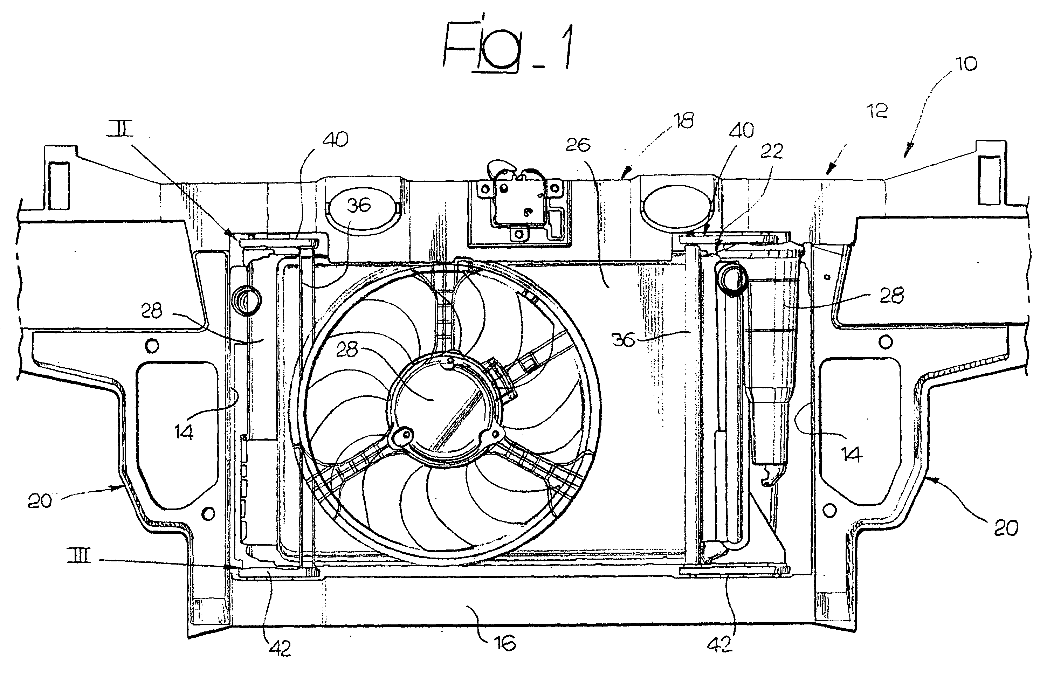

With reference to Figure 1, the number 10 designates a front heat-exchange module for vehicles, comprising a supporting structure made of plastic material 12, preferably built as described in a simultaneous patent application filed by the present applicant. The supporting structure 12 has a central opening 14 defined by a bottom supporting cross member 16, a top supporting cross member 18, and a pair of side uprights 20. The supporting structure 12 may consist of a single piece obtained by injection moulding or else, as described in the simultaneous patent application cited previously, the top supporting cross member 18 may consist of a separate component connected, in a removable way, to the remaining part of the supporting structure.

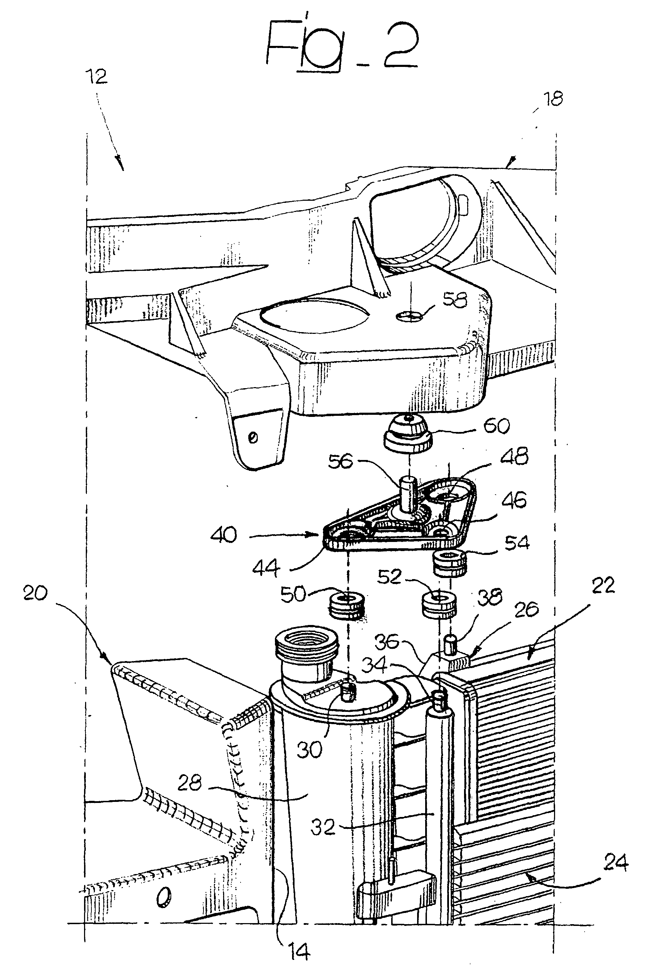

With reference to Figures 1 and 2, the front heat-exchange module 12 comprises a radiator 22, a condenser 24 and a conveyor 26 carrying an electric fan 28, connected to the supporting structure in the way that will be described in what follows. In a conventional way, the radiator 22 and the condenser 24 are set, with vertical orientation, very close to one another, with the condenser 24 set in front of the radiator 22. The conveyor 26 carrying the electric-fan assembly 28, again in a conventional way, is set behind the radiator 22. The radiator 22 has a pair of lateral manifold tanks 28, each of which has two fixing pins 30 with vertical orientation, which project one upwards and one downwards. The condenser 24 has a pair of lateral distributors 32, each of which has a pair of fixing pins 34 with vertical orientation, which project one upwards and one downwards. The conveyor 26 is provided with a pair of vertically oriented ribs 36 (see Figure 1) formed integrally, each of which carries at its ends a pair of fixing pins 38 (see Figure 2), which project one upwards and one downwards in a vertical direction.

According to the present invention, the front heat-exchange module 10 comprises two pairs of top fixing plates 40 and two pairs of bottom fixing plates 42 for connection to the supporting structure 12 of the radiator 22, condenser 24 and conveyor 26.

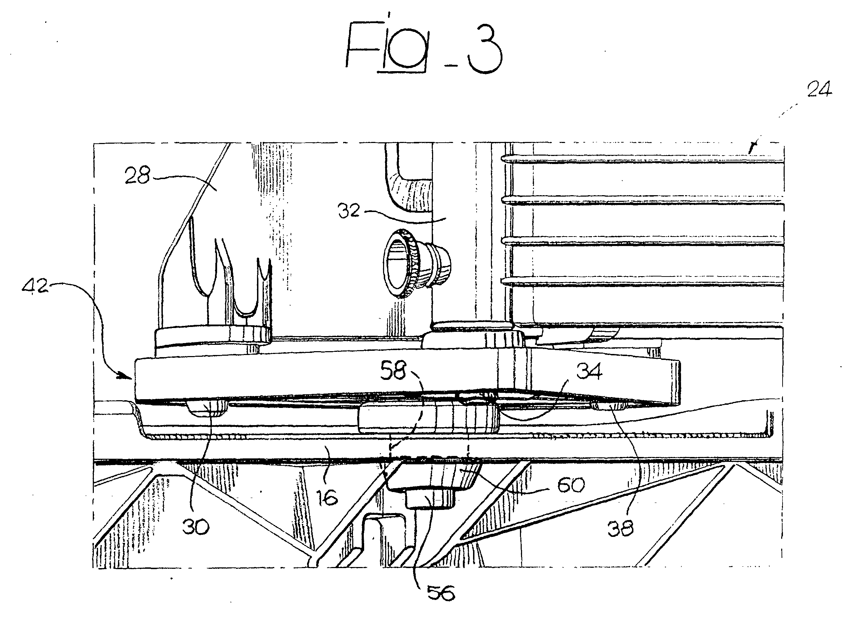

As is illustrated in Figures 2 and 3, each of the fixing plates 40, 42 is provided with three holes 44, 46, 48, which receive, respectively, the fixing pins 30, 36 and 38 of the radiator 22, condenser 24 and conveyor 26. As is illustrated in Figure 2, each of the pins 30, 34, 38 is preferably associated to a respective bushing 50, 52, 54 made of elastomeric material or the like, set between the outer surface of the respective pin 30, 34, 38 and the inner wall of the corresponding hole 44, 46, 48. Each fixing plate 40, 42 comprises a calibrated-failure fixing pin 56, which engages a corresponding hole 58 provided in the bottom supporting cross member 16 or top supporting cross member 18. A bushing made of elastomeric material 60 is preferably set between the outer surface of each calibrated-failure pin 56 and the inner wall of the respective hole 58.

The module formed by the radiator 22, the condenser 24 and the conveyor 26 is connected to the supporting structure 12 by means of the four calibrated-failure pins 56 of the four fixing plates 40, 42. In the event of frontal impact of the vehicle at a speed higher than a pre-set threshold, the calibrated-failure pins 56 break, and the module formed by the radiator 22, the condenser 24 and the conveyor 26 moves back without getting damaged. The fixing plates 40, 42 hold the radiator 22, the condenser 24 and the conveyor 26 in a position that is unvaried with respect to one another even following upon impact that produces failure of the calibrated-failure pins 56, so preventing any damage that could be induced by impact between the various components. To restore the conditions of normal operation following upon impact of slight degree, which has produced the failure of one or more of the pins 56, it is sufficient to replace the fixing plates the pins 56 of which have broken.

## Claims

1. A front heat-exchange module for vehicles, comprising:
- a radiator (22), a condenser (24) and a conveyor (26) carried by a supporting structure (12), and
- means for connecting said radiator (22), said condenser (24) and said conveyor to the supporting structure,
**characterized in that** the radiator (22), the condenser (24) and the conveyor (26) are provided with fixing pins with vertical orientation (30, 34, 38), which engage respective holes of fixing plates (40, 42), each of said fixing plates (40, 42) being provided with a calibrated-failure fixing pin (56), which engages a respective hole (58) made in a bottom supporting cross member (16) or top supporting cross member (18).

2. The heat-exchange module according to Claim 1, **characterized in that** each of said calibrated-failure fixing pins (56) is connected to the respective hole (58) with the interposition of a bushing made of elastomeric material (60).

3. The heat-exchange module according to Claim 1 or Claim 2, **characterized in that** each of said fixing pins (30, 34, 38) is connected to the respective hole (44, 46, 48) of the respective fixing plate (40, 42) with the interposition of a bushing made of elastomeric material (50, 52, 54).

## Patentansprüche

1. Vorderes Wärmetauschermodul für Fahrzeuge, aufweisend:
- einen Kühler (22), einen Kondensor (24) und eine Fördereinrichtung (26), getragen durch einen Trageaufbau (12), und
- Einrichtungen zum Verbinden des Kühlers (22), des Kondensors (24) und der Fördereinrichtung mit dem Trageaufbau,
**dadurch gekennzeichnet, dass** der Kühler (22), der Kondensor (24) und die Fördereinrichtung (26) mit Befestigungsstiften (30, 34, 38) mit vertikaler Orientierung versehen sind, welche in entsprechende Löcher von Befestigungsplatten (40, 42) eingreifen, wobei jede der Befestigungsplatten (40, 42) mit einem fehlerkalibrierten Befestigungsstift (56) versehen ist, welcher in ein entsprechendes Loch (58) in einem unteren Tragequerbauteil (16) oder einem oberen Tragequerbauteil (18) eingreift.

2. Wärmetauschermodul nach Anspruch 1, **dadurch gekennzeichnet, dass** jeder der fehlerkalibrierten Befestigungsstifte (56) mit dem entsprechenden Loch (58) unter Zwischenschaltung einer aus elastomerem Material bestehenden Buchse (60) verbunden ist.

3. Wärmetauschermodul nach Anspruch 1 oder 2, **dadurch gekennzeichnet, dass** jeder der Befestigungsstifte (30, 34, 38) mit dem jeweiligen Loch (44, 46, 48) der entsprechenden Befestigungsplatte (40, 42) unter Zwischenschaltung einer aus elastomerem Material bestehenden Buchse (50, 52, 54) verbunden ist.

## Revendications

1. Module frontal d'échange de chaleur pour véhicules, comprenant :
- un radiateur (22), un condenseur (24) et un transporteur d'air (26) portés par une structure de support (12) et
- des moyens permettant de relier le radiateur (22), le condenseur (24) et le transporteur d'air à la structure de support,
**caractérisé en ce que** le radiateur (22), le condenseur (24) et le transporteur d'air (26) sont pourvus de tétons de fixation orientés verticalement (30, 34, 38) qui s'engagent dans des perçages respectifs de plaques de fixation (40, 42), chacune de ces plaques de fixation (40, 42) étant pourvue d'un téton de fixation (56) calibré pour être ruptible, qui s'engage dans un perçage respectif (58) ménagé dans un élement transversal de support formant fond (16) ou dans un élément transversal de support supérieur (18).

2. Module d'échange de chaleur selon la revendication 1, **caractérisé en ce que** chacun des tétons de fixation (56) calibrés pour être ruptibles est assemblé avec le perçage respectif (58) avec interposition d'une douille en matériau élastomère (60).

3. Module d'échange de chaleur selon la revendication 1 ou la revendication 2, **caractérisé en ce que** chacun des tétons de fixation (30, 34, 38) calibré pour être ruptible est assemblé avec le perçage respectif (44, 46, 48) de la plaque de fixation respective (40, 42) avec interposition d'une douille en matériau élastomère (50, 52, 54).
